# EUROPEAN PATENT APPLICATION

(11) **EP 4 535 559 A1**
(43) Date of publication of application: **09.04.2025**
(21) Application number: 24199975.4
(22) Date of filing: 12.09.2024
(51) Int. Cl.: H01Q 1/22

(54) **WATER METER MULTIBAND REMOTE ANTENNA RF COUPLER**

(30) Priority: 06.10.2023 US 202318377610
(71) Applicant: Honeywell International Inc., Charlotte, NC 28202 (US)
(72) Inventor: SINGHVI, Shalu, Charlotte, 28202 (US); OSBORNE, Steven, Charlotte, 28202 (US); TURNER, Edward, Charlotte, 28202 (US)
(74) Representative: Haseltine Lake Kempner LLP

(57) **Abstract**

An antenna coupler can include an RF coupler comprising an RF coupler top portion and an RF coupler base portion, wherein an internal antenna can be connected to an electronic printed circuit board for RF signal output and the internal antenna can be partially potted with respect to the electronic printed circuit board for environmental protection of electronics. The antenna coupler can further include a housing that includes a top cover housing. The RF coupler top portion can reside on the top cover housing. In addition, the RF coupler top portion can include a flex-rigid printed circuit board.

## Description

### TECHNICAL FIELD

Embodiments are generally related to wireless communications technologies. Embodiments further relate to radio frequency (RF) couplers and antennas used in remote monitoring devices such as industrial field devices. Embodiments further relate to multiband remote antenna RF couplers used with remote monitoring devices such as remote water and gas meters.

### BACKGROUND

Remote water and gas meters, often referred to as smart meters, utilize technology such as antennas and antenna couplers to enable remote monitoring and data collection of water usage. These technologies are part of the broader concept of the Internet of Things (IoT), which aims to connect physical objects to the internet for enhanced functionality and data exchange.

A typical 'smart' water meter, for example, is a remote metering device that is equipped with various sensors and measurement mechanisms to accurately monitor water consumption. These meters are often designed to measure flow rates, pressure, and other relevant parameters. Instead of requiring manual reading by utility personnel, remote water meters can be equipped with technology that allows them to transmit data wirelessly. This eliminates the need for physical access to the meter and enables real-time monitoring.

The antenna used with a smart meter is designed to transmit and receive electromagnetic waves. In the context of remote water meters, an antenna is integrated into the meter itself. This antenna is responsible for sending out the collected data wirelessly to a remote location. A significant component used with the antenna is the antenna coupler, which can connect the antenna within the smart water meter to an external communication network. The antenna coupler bridges the gap between the internal antenna and the external communication infrastructure.

A smart water meter uses an integrated antenna to send data in the form of electromagnetic waves. These waves carry information about water consumption, meter readings, and possibly other relevant data. The antenna coupler ensures that the transmitted data is efficiently coupled to an external communication network, such as a cellular network or a dedicated IoT network. The data transmitted by the smart water meter's antenna is picked up by nearby communication infrastructure. This can include cellular towers, communication gateways, or other types of receivers. The data is then forwarded through the communication network to the utility company's servers or cloud-based platforms.

Once the data reaches the utility company's servers, it is processed, analyzed, and stored. Advanced analytics tools can be employed to monitor consumption patterns, identify leaks, and make informed decisions about water distribution and resource management.

In some situations, a water meter may be installed in a pit and located as deep as, for example, 3 to 4 feet below surface levels. Generally, such endpoints may be required to transmit at a relatively higher power level just to overcome losses due to their location. When water is added to the equation, there is even more attenuation. If an external/remote antenna can be located closer to a pit lid to re-radiate the RF signals, attenuation from water pit and pit depth may be minimized.

Smart water meter electronics are generally encapsulated or potted to protect from harsh environments. Connecting the external/remote antenna cable through potting material can create voids with potting and may violate IP68 ratings. RF connectors are not recommended under porting material as its RF performance degrades. Soldering an antenna cable directly to the electronics poses challenges during production assembly and shipping with a permanent antenna connection to the electronic board. A coupling between internal and remote antennas can reduce the RF power to, for example, 5dBm or more, which is even worse with wideband support (e.g.; 790MHZ-1900MHz). A need thus exists to provide for an improved antenna device including improved antenna components such as antenna couplers to address these problems.

### BRIEF SUMMARY

The following summary is provided to facilitate an understanding of some of the features of the disclosed embodiments and is not intended to be a full description. A full appreciation of the various aspects of the embodiments disclosed herein can be gained by taking the specification, claims, drawings, and abstract as a whole.

It is, therefore, one aspect of the disclosed embodiments to provide for improved wireless communications technologies.

It is another aspect of the disclosed embodiments to provide for improved RF couplers and antennas for use in remote monitoring devices such as industrial field devices.

It is a further aspect of the disclosed embodiments to provide for a multiband remote antenna RF coupler for use with remote monitoring devices such as remote water and gas meters.

It is an additional aspect of the disclosed embodiments to provide for an improved antenna coupler.

The aforementioned aspects and other objectives can now be achieved as described herein. In an embodiment, an antenna coupler can include an RF coupler including an RF coupler top portion and an RF coupler base portion, wherein an internal antenna can be connected to an electronic printed circuit board for RF signal output and the internal antenna can be partially potted with respect to the electronic printed circuit board for environmental protection of electronics. The antenna coupler can further include a housing that includes a top cover housing. The RF coupler top portion can reside on the top cover housing. In addition, the electronic printed circuit board can comprise a flex-rigid printed circuit board.

In an embodiment, the RF coupler top portion can contain the flex-rigid printed circuit board, which can couple RF energy through air or a magnetic medium from the internal antenna.

In an embodiment, the RF coupler top portion can contain, for example, a 50 ohm impedance controlled copper plane that can couple RF energy through air or a magnetic medium from the internal antenna.

In an embodiment, the RF coupler base portion with the internal antenna can be directly soldered to the electronic printed circuit board.

In an embodiment, the RF coupler top portion can comprise a 50ohm impedance line, connected to RF connector, and the RF connector can connect to an external antenna through a coaxial cable external to the antenna coupler.

In an embodiment, the RF coupler top portion can be IP68 protected by a sealing medium.

In an embodiment, the RF coupler top portion can slide into the RF coupler base portion and couples RF energy through air or a magnetic medium.

In an embodiment, the RF coupler top potion can slide into a position alongside the RF coupler base portion and couples RF energy through air or a magnetic medium.

In an embodiment, the RF coupler can couple internal antenna signals with respect to the internal antenna with the external antenna for wide RF frequencies in a range of approximately 790MHz-1900MHz.

In an embodiment, the RF coupler losses with respect to the RF coupler can be less than 4dBm across a wideband frequency range.

In an embodiment, an antenna coupler can include: an RF coupler comprising an RF coupler top portion and an RF coupler base portion, wherein an internal antenna can be connected to an electronic printed circuit board for RF signal output and wherein the internal antenna may be partially potted with respect to the electronic printed circuit board for environmental protection of electronics. The electronic printed circuit board can include a flex-rigid printed circuit board and a housing that includes a top cover housing. The RF coupler top portion can reside on the top cover housing, and the RF coupler top portion can contain the flex-rigid printed circuit board, which can couple RF energy through air or a magnetic medium from the internal antenna.

In an embodiment, a method of operating an antenna coupler can involve: coupling via an RF coupler, internal antenna signals with respect to an internal antenna with an external antenna for wide RF frequencies in a range of approximately 790MHz-1900MHz, wherein the RF coupler can include an RF coupler top portion and an RF coupler base portion and the internal antenna can be connected to an electronic printed circuit board for RF signal output. The internal antenna can be partially potted with respect to the electronic printed circuit board for environmental protection of electronics.

In an embodiment of the method, the electronic printed circuit board can comprise a flex-rigid printed circuit board and the RF coupler top portion contains the flex-rigid printed circuit board, which couples RF energy through air or a magnetic medium from the internal antenna.

In an embodiment of the method, the RF coupler top portion can contain a 50 ohm impedance controlled copper plane that couples RF energy through air or a magnetic medium from the internal antenna.

In an embodiment of the method, the RF coupler top portion can include a 50ohm impedance line, connected to RF connector, wherein the RF connector can connect to an external antenna through a coaxial cable external to the antenna coupler.

In the an embodiment of the method, the RF coupler top potion can slide into a position alongside the RF coupler base portion and can couple RF energy through air or a magnetic medium.

In an embodiment of the method, the RF coupler can couple internal antenna signals with respect to the internal antenna with the external antenna for wide RF frequencies in a range of approximately 790MHz-1900MHz.

In an embodiment of the method, RF coupler losses with respect to the RF coupler can be less than 4dBm across a wideband frequency range.

### BRIEF DESCRIPTION OF THE DRAWINGS

The accompanying figures, in which like reference numerals refer to identical or functionally similar elements throughout the separate views and which are incorporated in and form a part of the specification, further illustrate the present invention and, together with the detailed description of the invention, serve to explain the principles of the present invention.
FIG. 1 illustrates a pictorial diagram of an antenna coupler, in accordance with an embodiment;
FIG. 2 illustrates a pictorial diagram of a cover, in accordance with an embodiment;
FIG. 3 illustrates an exploded view of the antenna coupler, in accordance with an embodiment;
FIG. 4 illustrates a cut-away view of a portion of the antenna coupler, in accordance with an embodiment; and
FIG. 5 illustrates a pictorial view of the antenna coupler when assembled, in accordance with an embodiment.

Identical or similar parts or elements in the figures may be indicated by the same reference numerals.

### DETAILED DESCRIPTION

The particular values and configurations discussed in these non-limiting examples can be varied and are cited merely to illustrate one or more embodiments and are not intended to limit the scope thereof.

Subject matter will now be described more fully hereinafter with reference to the accompanying drawings, which form a part hereof, and which show, by way of illustration, specific example embodiments. Subject matter may, however, be embodied in a variety of different forms and, therefore, covered or claimed subject matter is intended to be construed as not being limited to any example embodiments set forth herein; example embodiments are provided merely to be illustrative. Likewise, a reasonably broad scope for claimed or covered subject matter is intended. Among other issues, subject matter may be embodied as methods, devices, components, or systems. Accordingly, embodiments may, for example, take the form of hardware, software, firmware, or a combination thereof. The following detailed description is, therefore, not intended to be interpreted in a limiting sense.

Throughout the specification and claims, terms may have nuanced meanings suggested or implied in context beyond an explicitly stated meaning. Likewise, phrases such as "in an embodiment" or "in one embodiment" or "in an example embodiment" and variations thereof as utilized herein may or may not necessarily refer to the same embodiment and the phrase "in another embodiment" or "in another example embodiment" and variations thereof as utilized herein may or may not necessarily refer to a different embodiment. It is intended, for example, that claimed subject matter include combinations of example embodiments in whole or in part.

In general, terminology may be understood, at least in part, from usage in context. For example, terms such as "and," "or," or "and/or" as used herein may include a variety of meanings that may depend, at least in part, upon the context in which such terms are used. Generally, "or" if used to associate a list, such as A, B, or C, is intended to mean A, B, and C, here used in the inclusive sense, as well as A, B, or C, here used in the exclusive sense. In addition, the term "one or more" as used herein, depending at least in part upon context, may be used to describe any feature, structure, or characteristic in a singular sense or may be used to describe combinations of features, structures, or characteristics in a plural sense. Similarly, terms such as "a," "an," or "the", again, may be understood to convey a singular usage or to convey a plural usage, depending at least in part upon context. Furthermore, the term "at least one" as used herein, may refer to "one or more." For example, "at least one widget" may refer to "one or more widgets."

In addition, the term "based on" may be understood as not necessarily intended to convey an exclusive set of factors and may, instead, allow for existence of additional factors not necessarily expressly described, again, depending at least in part on context.

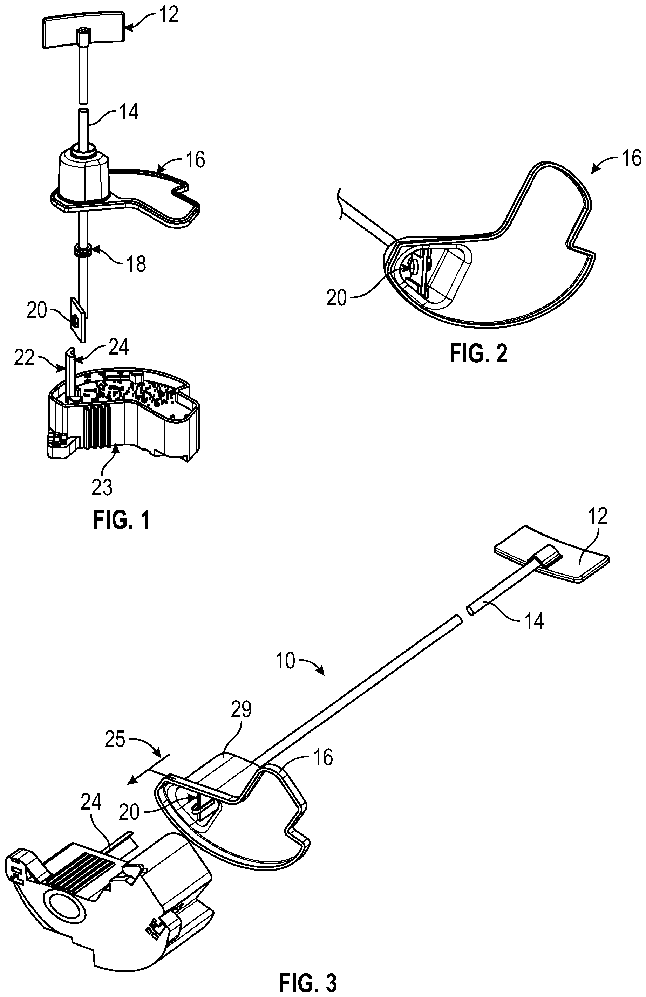

FIG. 1 illustrates a pictorial diagram of an antenna coupler 10, in accordance with an embodiment. The antenna coupler 10 shown in FIG. 1 can include an external antenna that can connect to a Coax cable 14, which can extend through a cover 16 to engage a sealing component 18 and then connects to a RF coupler 20. The antenna coupler 10 can further include an internal antenna 22, and an RF coupler base 23. The antenna coupler 10 can function as a low losses RF coupler that can couple internal antenna signals from the internal antenna 22 with a remote/external antenna such as the external antenna 12 for wideband RF frequencies in a range of, for example, 790MHz-1900MHz. It should be appreciated that the embodiments are not limited to this particular wideband RF frequency range, which is presented herein for exemplary and illustrative purposes only.

FIG. 2 illustrates a pictorial diagram of the cover 16, in accordance with an embodiment. The cover 16 can be configured with an indented section into which the RF coupler 20 may be positioned. The cover 16 may cover the RF coupler base 23. Furthermore, the RF coupler base with the internal antenna 22 may be directly soldered to an electronic printed circuit board (PCB), which is shown in FIG. 1 at the top of the RF coupler base 23.

FIG. 3 illustrates an exploded view of the antenna coupler 10, in accordance with an embodiment. The RF coupler base 23 supports the internal antenna22, which can engage with the RF coupler 20. The arrow 25 shown in FIG. 3 indicates how the cover can engage with the RF coupler base 23. The antenna coupler 10 includes an RF coupler top portion and an RF coupler bottom portion. That is, the RF coupler top portion can include the RF coupler 20, while the RF coupler bottom portion can include the internal antenna 22

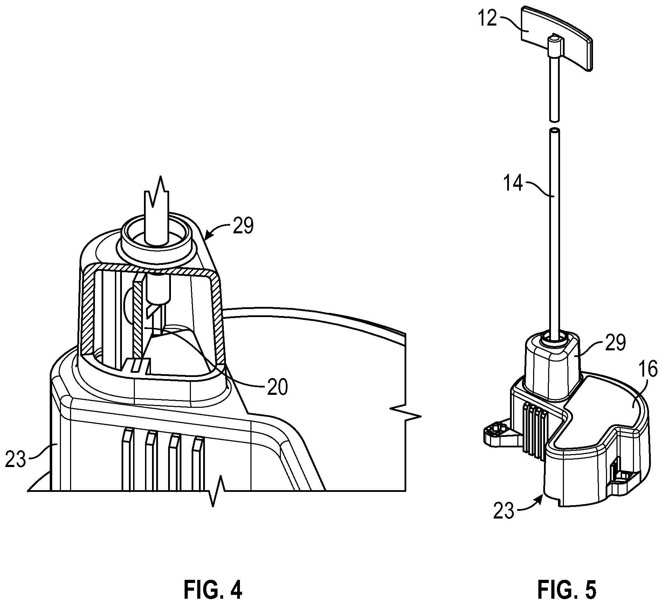

FIG. 4 illustrates a cut-away view of the top cover housing 29, in accordance with an embodiment. The RF coupler top portion including the RF coupler 20 can reside in the top cover housing 29, which in turn can reside on the cover 16, which covers the RF coupler base 23.

FIG. 5 illustrates a pictorial view of the antenna coupler 10 when assembled, in accordance with an embodiment. The antenna coupler 10 includes the RF coupler base portion 23 discussed above with the internal antenna 22 directly connected or soldered to an electronic PCB. In some embodiments, the RF coupler base portion 23 can be partially potted to protect the electronics from a harsh environment. The RF coupler top portion, which can include the RF coupler 20 and other top portion components such as the top cover housing 29 can contain a PCB or copper plane capable of coupling RF energy through air or a magnetic medium.

In some embodiments, the RF coupler top portion can contain an impedance network that can tune transmission frequencies and a coaxial cable to connect with the external antenna 12. The RF coupler top portion can be IP68 protected with a sealing gromet (e.g., see the sealing mechanism 18) and can slide into the RF coupler base part (e.g., see arrow 25 in FIG. 3) and couple RF energy either through air or the previously mentioned magnetic medium. In some embodiments, RF coupler losses would be less the 4dBm across the wideband frequency range.

Based on the foregoing, it can be appreciated that a number of embodiments including preferred and alternative embodiments, are disclosed. For example, in an embodiment, the antenna coupler 10 can include an RF coupler comprising an RF coupler top portion and an RF coupler base portion, wherein the internal antenna 22 is connected to an electronic printed circuit board for RF signal output and wherein the internal antenna is partially potted with respect to the electronic printed circuit board for environmental protection of electronics. The antenna coupler 10 can further include a housing that functions as the top cover housing 29. The RF coupler top portion can reside on the top cover housing 29. In addition, the previously discussed electronic printed circuit board can comprise a flex-rigid printed circuit board.

In an embodiment, the RF coupler top portion can contain the flex-rigid printed circuit board, wherein the flex part of flex portion of the flex-rigid printed circuit board (PCB) can be easily assembled into the top cover housing 29 and can be used to form an irregular flexible-shaped copper plane to couple maximum RF energy through air or a magnetic medium from the internal antenna. In some embodiments, the flex-rigid PCB, rigid part can be used for 50 ohm impedance line and to mount an RF connector or solder the external antenna 12 / coax cable 14.

In an embodiment, the RF coupler top portion can contain a 50 ohm impedance controlled copper plane that couples RF energy through air or a magnetic medium from the internal antenna.

In an embodiment, RF coupler base portion 23 with the internal antenna 22 can be directly soldered to the electronic printed circuit board.

In an embodiment, the RF coupler top portion can comprise a 50ohm impedance line, connected to RF connector, wherein the RF connector connects to an external antenna through a coaxial cable such as the cable 14.

In an embodiment, the RF coupler top portion can be IP68 protected by a sealing medium.

In an embodiment, the RF coupler top portion can slide into the RF coupler base portion and couples RF energy through air or a magnetic medium.

In an embodiment, the RF coupler top potion can slide into a position alongside the RF coupler base portion and couples RF energy through air or a magnetic medium.

In an embodiment, the RF coupler composed of the RF coupler 24 and the RF coupler 20 can couple internal antenna signals with respect to the internal antenna 22 with the external antenna 12 for wide RF frequencies in a range of approximately 790MHz-1900MHz.

In an embodiment, the RF coupler losses with respect to the RF coupler can be less than 4dBm across a wideband frequency range. Note that the RF coupler discussed herein may include the RF coupler 20 and the RF coupler 24. In some embodiments, the internal antenna 22 and the RF coupler 24 may be the same part and can function as an internal antenna and together may serve as an RF coupler base part.

In an embodiment, an antenna coupler can include an RF coupler comprising an RF coupler top portion and an RF coupler base portion, wherein an internal antenna can be connected to an electronic printed circuit board for RF signal output and the internal antenna can be partially potted with respect to the electronic printed circuit board for environmental protection of electronics. Furthermore, the RF coupler 20 can include a flex-rigid printed circuit board. A housing can include a top cover housing, wherein the RF coupler top portion can reside on the top cover housing and the RF coupler top portion can contain the flex-rigid printed circuit board, which can couple RF energy through air or a magnetic medium from the internal antenna.

In an embodiment, a method of operating an antenna coupler can involve: coupling via an RF coupler, internal antenna signals with respect to an internal antenna with an external antenna for wide RF frequencies in a range of approximately 790MHz-1900MHz, wherein the RF coupler includes an RF coupler top portion and an RF coupler base portion, wherein the internal antenna is connected to an electronic printed circuit board for RF signal output and wherein the internal antenna is partially potted with respect to the electronic printed circuit board for environmental protection of electronics.

In an embodiment of the method, the RF coupler top portion can contain the flex-rigid printed circuit board, which can couple RF energy through air or a magnetic medium from the internal antenna.

In an embodiment of the method, the RF coupler top portion can contain a 50 ohm impedance controlled copper plane that can couple RF energy through air or a magnetic medium from the internal antenna.

In an embodiment of the method, the RF coupler top portion can include a 50ohm impedance line, connected to RF connector, wherein the RF connector connects to an external antenna through a coaxial cable external to the antenna coupler.

In the an embodiment of the method, the RF coupler top portion can slide into a position alongside the RF coupler base portion and couples RF energy through air or a magnetic medium.

In an embodiment of the method, the RF coupler can couple internal antenna signals with respect to the internal antenna with the external antenna for wide RF frequencies in a range of approximately 790MHz-1900MHz.

In an embodiment of the method, RF coupler losses with respect to the RF coupler can be less than 4dBm across a wideband frequency range.

In some embodiments, various functions described above may be implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The term "controller" means any device, system, or part thereof that controls at least one operation. A controller may be implemented in hardware or a combination of hardware and software/firmware. The functionality associated with any particular controller may be centralized or distributed, whether locally or remotely.

It will be appreciated that variations of the above-disclosed and other features and functions, or alternatives thereof, may be desirably combined into many other different systems or applications. It will also be appreciated that various presently unforeseen or unanticipated alternatives, modifications, variations or improvements therein may be subsequently made by those skilled in the art which are also intended to be encompassed by the following claims.

## Claims

1. An antenna coupler, comprising:
an RF coupler comprising an RF coupler top portion and an RF coupler base portion, wherein an internal antenna is connected to an electronic printed circuit board for RF signal output and wherein the internal antenna is partially potted with respect to the electronic printed circuit board for environmental protection of electronics; and
a housing that includes a top cover housing, wherein the RF coupler top portion resides on the top cover housing.

2. The antenna coupler of claim 1 wherein the RF Coupler comprises a flex-rigid printed circuit board.

3. The antenna coupler of claim 2 wherein the RF coupler top portion contains the flex-rigid printed circuit board, which couples RF energy through air or a magnetic medium from the internal antenna.

4. The antenna coupler of claim 1 wherein the RF coupler top portion contains an impedance controlled copper plane that couples RF energy through air or a magnetic medium from the internal antenna.

5. The antenna coupler of claim 1 wherein the RF coupler base portion with the internal antenna is directly soldered to the electronic printed circuit board.

6. The antenna coupler of claim 1 wherein the RF coupler top portion comprises a 50ohm impedance line, connected to RF connector, wherein the RF connector connects to an external antenna through a coaxial cable external to the antenna coupler.

7. The antenna coupler of claim 1 wherein the RF coupler top portion is IP68 protected by a sealing medium.

8. The antenna coupler of claim 1 wherein the RF coupler top portion slides into the RF coupler base portion and couples RF energy through air or a magnetic medium.

9. An antenna coupler, comprising:
an RF coupler comprising an RF coupler top portion and an RF coupler base portion, wherein an internal antenna is connected to an electronic printed circuit board for RF signal output and wherein the internal antenna is partially potted with respect to the electronic printed circuit board for environmental protection of electronics, the electronic printed circuit board comprising a flex-rigid printed circuit board; and
a housing that includes a top cover housing, wherein the RF coupler top portion resides on the top cover housing, wherein the RF coupler top portion contains the flex-rigid printed circuit board, which couples RF energy through air or a magnetic medium from the internal antenna.

10. A method of operating an antenna coupler, comprising:
coupling via an RF coupler, internal antenna signals with respect to an internal antenna with an external antenna for wide RF frequencies in a range of approximately 790MHz-1900MHz, wherein the RF coupler includes an RF coupler top portion and an RF coupler base portion, wherein the internal antenna is connected to an electronic printed circuit board for RF signal output and wherein the internal antenna is partially potted with respect to the electronic printed circuit board for environmental protection of electronics.
